# EUROPÄISCHE PATENTSCHRIFT

(11) **EP 3 563 469 B1**
(45) Veröffentlichungstag und Bekanntmachung des Hinweises auf die Patenterteilung: **27.12.2023**
(21) Anmeldenummer: 18729401.2
(22) Anmeldetag: 05.06.2018
(51) Int. Cl.: H02K 3/28, H02K 1/16, H02K 3/12

(54) **WICKELANORDNUNG FÜR EINE DREHFELDMASCHINE**
WINDING ARRANGEMENT FOR AN INDUCTION MACHINE
ENROULEMENT POUR UNE MACHINE À CHAMP TOURNANT

(30) Priorität: 12.06.2017 DE 102017112837
(43) Veröffentlichungstag der Anmeldung: 06.11.2019
(73) Patentinhaber: ebm-papst Mulfingen GmbH & Co. KG, 74673 Mulfingen (DE)
(72) Erfinder: HUTH, Gerhard, 97618 Hohenroth-Leutershausen (DE); KROTSCH, Jens, 97996 Niederstetten (DE)
(74) Vertreter: Staeger & Sperling Partnerschaftsgesellschaft mbB
(86) Internationale Anmeldenummer: PCT/EP2018/064694
(87) Internationale Veröffentlichungsnummer: WO 2018/228854

(56) Entgegenhaltungen:
- WO-A2-2008/044019
- DE-A1-102004 058 045
- DE-A1-102015 118 576
- US-A1- 2013 015 742

## Beschreibung

Die Erfindung betrifft eine Wicklungsanordnung für eine Drehfeldmaschine sowie eine Drehfeldmaschine mit einer solchen Wicklungsanordnung.

Umrichter gespeiste permanentmagneterregte Synchronmaschinen (PM Synchronmaschinen) kommen bei einer Vielzahl von technischen Anwendungen zum Einsatz. Aus Kostengründen werden PM Synchronmaschinen, zunehmend mit so genannten Zahnspulenwicklungen ausgeführt. Die Zahnspulentechnik vereinfacht den Ständeraufbau einer PM-Synchronmaschine und ermöglicht zudem einen segmentierten Ständeraufbau, so dass der Ständer modulweise in einer Art Baukastenkonzept gefertigt werden kann. Nachteilig bei der Zahnspulenwicklung ist es, dass diese ein breites Luftspaltfeldspektrum ausbilden, das je nach Motordesign mehr oder weniger störend sein kann.

Im Stand der Technik sind bereits unterschiedliche Wicklungskonzepte bekannt. Die Druckschrift US 20120228981 A1 setzt sich die Reduzierung einer Subharmonischen in Bezug auf die Arbeitsfeldwelle zur Aufgabe und schlägt als Lösung eine Mehrschichtwicklung, bestehend aus mindestens zwei Spulenseiten pro Nut vor, wobei die Leiterzahl der Spulenseiten in einer ersten Nut von der Leiterzahl der Spulenseiten in einer zweiten Nut verschieden ist, wobei die Spulen als Zahnspulen ausgeführt werden.

In der Druckschrift US 20120001512 A1 wir ein Stator mit einer doppelter Anzahl von Nuten gegenüber dem Stand der Technik vorgeschlagen. Die Spulen umschließen dabei jeweils zwei Zähne. Die Spulen sind gekennzeichnet durch unterschiedliche Windungszahlen bei gleicher Spulenweite.

Auch die Druckschrift US 20140035425 A1 beschäftigt sich mit der Reduzierung von unerwünschten Oberfeldern durch eine kostengünstig herstellbare Wicklung. Es wird eine Mehrschicht-Zahnspulenwicklung vorgeschlagen, wobei die einzelnen Spulen eines Stranges unterschiedliche Windungszahlen aufweisen und die Zähne eine unterschiedliche Anzahl von Zahnspulen tragen. Auch diese Wicklungstopologie ist für kleine Polzahlen nicht zielführend.

Bei sogenannten AC-Line-Start-Motoren besteht die Notwendigkeit der Line-Start-Funktionalität, wobei sich das breite Luftspaltfeldspektrum der Zahnspulenwicklungen störend auswirkt, da durch die hieraus resultierenden Oberwellendrehmomente der Hochlauf der Line-Start-Motoren insgesamt gestört bis unterbunden wird. Käfigläufermotoren und PM-Line-Start-Motoren sind daher mit den im Stand der Technik bekannten Zahnspulenwicklungen somit nicht sinnvoll ausführbar. Dahingegen lassen sich z. B. kleine PM Synchronmotoren, die feldorientiert am Umrichter betrieben werden und zunehmend im Bereich der Hochdrehzahlantriebe zum Einsatz kommen, grundsätzlich in Zahnspulentechnik ausführen.

Ein weiteres grundsätzliches Problem besteht in der Nutzung der Zahnspulenwicklung bei niedrigen Polzahlen. Da Zahnspulenwicklungen Prinzip bedingt zu höheren Polpaarzahlen tendieren, lassen sich PM Synchronmotoren mit niedriger Polzahl (z. B. 2-polig oder 4-polig) für Hochdrehzahlantriebe mit den bekannten Zahnspulenwicklungen nur sehr beschränkt realisieren.

Weiterer Druckschriftlicher Stand der Technik im vorliegenden Technischen Gebiet, welcher den Oberbegriff des Anspruchs 1 widerspiegelt, ist in den Dokumenten DE 10 2015 118 576 A1, WO 200844 019 A2, US 2013/015 742 A1 und DE 10 2004 058 045 A1 offenbart.

Es ist daher Aufgabe der vorliegenden Erfindung vorbesagte Nachteile zu überwinden und eine Wicklungstopologie in der Ausprägung einer Zahnspulenwicklung mit kurzem Wickelkopf vorzuschlagen, die auch bei niedrigen Polzahlen (2-polig und 4-polig) wirkungsvoll einsetzbar ist und zudem ein günstiges Wicklungsfeldspektrum besitzt. Es besteht demnach ein Bedarf nach einem einfach und kostengünstig herstellbaren Wicklungssystem mit einem möglichst großen Grundfeldwicklungsfaktor kleiner Ordnungszahl bzw. Polzahl bei möglichst kleinen Wicklungsfaktoren der Wicklungsoberfelder.

Diese Aufgabe wird durch die Merkmalskombination gemäß Anspruch 1 gelöst.

Ein Grundgedanke der vorliegenden Erfindung besteht darin, eine Doppel-Zahnspulenwicklung (auch als DOZA-Wicklung bezeichnet) zu verwenden und ein spezifisches Wicklungsschema vorzusehen. Das Grundelement und damit das Gleichteil dieser Doppel-Zahnspulenwicklung ist eine Doppel-Zahnspule, die jeweils vier benachbarte Nuten des Ständers zur Hälfte belegt. Dies bedeutet, dass diese Anzahl benachbarten Nuten entweder in der Oberschicht oder in der Unterschicht durch einen Wicklungsstrang belegt sind. Die Doppel-Zahnspule besteht somit aus zwei konzentrisch angeordneten Spulen eines Wicklungsstrangs und zwar einer inneren Spule sowie einer äußeren Spule, die um die Zähne die für die innere Spule verwendet wurden, herum gewickelt ist.

Die beiden konzentrisch angeordneten aus einem Wicklungsstrang gewickelten Spulen bilden ein Spulenpaar aus. Im Bereich des Wickelkopfs verlaufen demnach die Windungen der äußeren Spule des Spulenpaars oberhalb der Windungen der inneren Spule dieses Spulenpaars.

Erfindungsgemäß wird demnach eine Wicklungsanordnung für eine Drehfeldmaschine sowie eine Drehfeldmaschine mit einem 2p-poligen Ständer mit einer solchen Wicklungsanordnung vorgeschlagen, wobei p die Polpaarzahl und 2p die Polzahl bezeichnet. Diese Wicklungsanordnung wird aus einer Doppel-Zahnspulenwicklung gebildet umfassend m Wicklungsstränge U, V, W, wobei die Wicklungsanordnung aus wenigstens einer ersten Doppel-Zahnspule und wenigstens einer zweiten Doppel-Zahnspule besteht, die jeweils (vorzugsweise vier) benachbarte Nuten des Ständers zur Hälfte mit einem Wicklungsstrang belegen, wobei jede Doppel-Zahnspule zwei konzentrisch angeordneten Spulen ausbildet und die zweite Doppel-Zahnspule um eine Polteilung gegenüber der ersten Doppel-Zahnspule in Umlaufrichtung versetzt angeordnet ist.

Ferner sind die jeweiligen Doppelzahnspulen, die in der Unterschicht mit einem ersten Wicklungsstrang bewickelt sind in deren Oberschicht mit wenigstens einem zweiten davon abweichenden, vorzugsweise mit einem Spulenabschnitt eines zweiten und dritten davon abweichenden Strangs bewickelt.

Erfindungsgemäß ist demnach vorgesehen, dass die jeweils vier benachbarten Nuten des Ständers, die zur Hälfte mit einem Wicklungsstrang bewickelt sind, entweder in der Oberschicht oder der Unterschicht dieser Doppelzahn-Spule bewickelt sind.

In einer weiteren vorteilhaften Ausgestaltung der Erfindung ist vorgesehen, dass die Stromrichtung im Wicklungsstrang der zwei Spulen der ersten Doppel-Zahnspule umgekehrt ist zur Stromrichtung in diesem Wicklungsstrang der beiden Spulen der zweiten dazu um eine Polteilung versetzten Doppel-Zahnspule.

Auf diese Weise ist zwar die Reihenfolge der in der Unterschicht jeweils nebeneinander gewickelten Spulenpaaren der Wicklungsstränge U, V, W gleich derjenigen in der Oberschicht gewickelten Spulenpaare, jedoch sind diese in Umfangsrichtung zueinander versetzt angeordnet und gleiche Stränge jeweils in entgegengesetzter Stromrichtung gewickelt.

In einer weiteren bevorzugten Ausgestaltung der Erfindung ist vorgesehen, dass zwischen einem Spulenpaar einer jeweils ersten Doppel-Zahnspule und einem dazu versetzten Spulenpaar einer zweiten Doppel-Zahnspule eines Wicklungsstrangs jeweils eine dritte bzw. vierte Doppel-Zahnspule angeordnet ist, die jeweils zwei Nuten belegen.

Weiter ist daher mit Vorteil vorgesehen, dass die Spulen der m Wicklungsstränge in der Oberschicht und der Unterschicht gegeneinander jeweils um den Winkel

| | |
|---|---|
| 2π / m p | für m ungerade |
| π / m p | für m gerade |

zueinander versetzt angeordnet sind, wobei p die Polpaarzahl ist.

In einer weiteren vorteilhaften Ausgestaltung der Erfindung ist vorgesehen, dass diejenigen Spulen eines der m Wicklungsstränge in der Oberschicht gegenüber denjenigen Spulen des gleichen Wicklungsstrangs in der Unterschicht gegeneinander jeweils um zwei Nutteilungen versetzt sind.

Es ist weiter mit Vorteil vorgesehen, dass die Reihenfolge der Wicklungsstränge U, V, W in Umlaufrichtung des Ständers in der Unterschicht und der Oberschicht gleich ist, während die Stromrichtung in den entsprechenden Spulen der Wicklungsstränge jeweils in den Spulenpaaren der Unterschicht und der Oberschicht gegenläufig ist.

Die Anzahl der Windungen in einem Spulenstrang der inneren Spule eines Spulenpaars einer Doppel-Zahnspule wird bevorzugt geringer gewählt als die Anzahl der Windungen dieses Spulenstrangs in der äu-βeren Spule des Spulenpaars im Bereich dieser Doppel-Zahnspule.

Besonders vorteilhaft lässt sich die Erfindung bei permanenterregten Synchronmaschinen mit einem 2-oder 4-poligen Ständer, weiter vorzugsweise mit drei Wicklungssträngen realisieren.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Nutbelegung einer Doppel-Zahnspule mit innerer und äußerer Spule,
- Fig. 2: einen Ausschnitt eines Zonenplans einer Doppel-Zahnspule,
- Fig. 3: einen Strang-Zonenplan einer 2-poligen Doppel-Zahnspulenwicklung;
- Fig. 4: einen Zonenplan einer 2-poligen Doppel-Zahnspulenwicklung mit der Strangzahl m = 3,
- Fig. 5: einen Zonenplan einer 4-poligen Doppel-Zahnspulenwicklung mit der Strangzahl m = 3 und
- Fig. 6: eine Nutbelegung einer Doppel-Zahnspule mit innerer und äußerer Spule mit jeweils unterschiedlichen Windungszahlen.

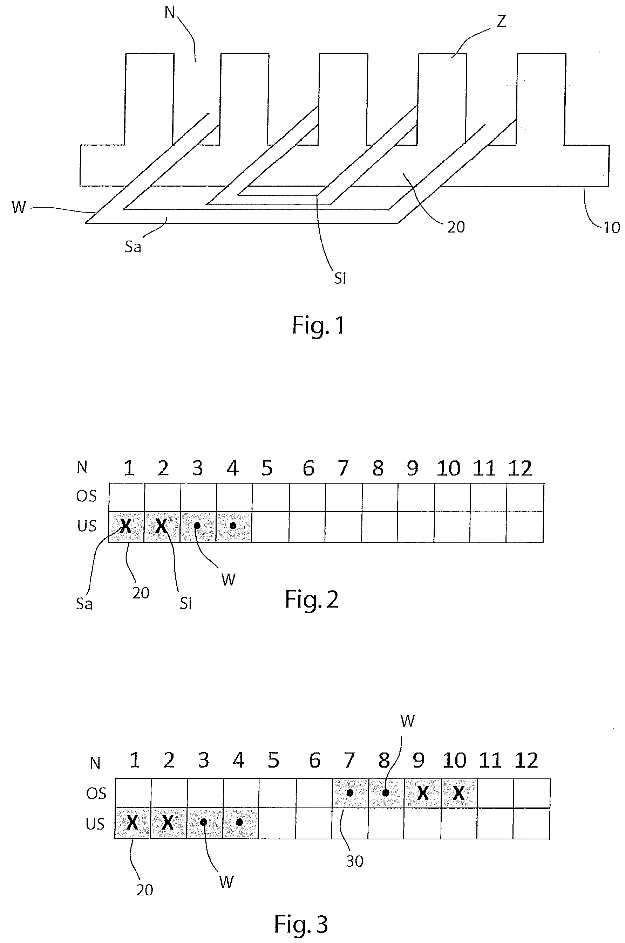

Die Erfindung wird im Folgenden mit Bezug auf die Figuren 1 bis 6 näher beschrieben, wobei gleiche Bezugszeichen auf gleiche strukturelle oder funktionale Merkmale hinweisen. Die Fig. 1 zeigt eine Nutbelegung einer schematisch dargestellten Doppel-Zahnspule 20 eines Ständers 10 mit Zähnen Z mit innerer und äußerer Spule Si und Sa. Die innere und äußere Spule Si und Sa werden aus einem Wicklungsstrang W gewickelt, wobei die Anzahl der Windungen gleich oder unterschiedlich sein kann.

Die Fig. 2 zeigt die Doppelzahnspulenwicklung, wie in der Figur 1 dargestellt als Ausschnitt eines Zonenplans. Die Unterschicht US ist hier mit der inneren und äußeren Spule belegt. Ferner ist der Wickelsinn bzw. die augenblickliche Stromrichtung dargestellt, wobei die Stromrichtung bei den beiden Nuten 1 und 2 in Blatteintrittsrichtung und in den beiden Nuten 3 und 4 in Blattaustrittsrichtung erfolgt.

Ein 2-poliger Drehfeldständer mit einer solchen Doppel-Zahnspulenwicklung für die Wicklungsstrangzahl m = 3 umfasst demnach m × 4 = 3 × 4 = 12 Nuten, wie diese in den Zonenplänen der Figu-ren 2 bis 4 und 6 dargestellt sind.

Die Fig. 3 zeigt einen Strang-Zonenplan einer 2-poligen Doppel-Zahnspulenwicklung d.h. die Wicklung eines Wicklungsstrangs W in einer Unterschicht US und einer Oberschicht OS. Die zwei Doppel-Zahnspulen 20, 30 dieses Stranges W werden gemäß diesem Ausführungsbeispiel genau um eine Polteilung bei dem 2-poligen Fall, also um 6 Nutteilungen, gegeneinander verschoben und werden genau umgekehrt bestromt. Die augenblickliche Stromrichtung ist wiederum aus dem Zonenplan zu entnehmen.

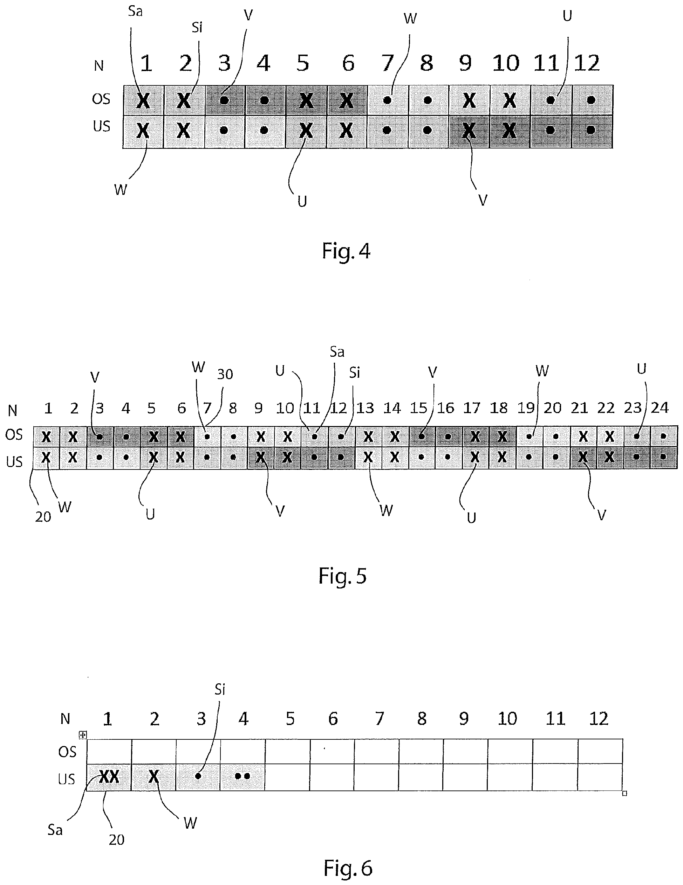

Die Fig. 4 zeigt einen Zonenplan einer 2-poligen Doppel-Zahnspulenwicklung der Strangzahl m = 3 mit den drei Wicklungssträngen U, V, W. Die unterschiedlichen Wicklungsstränge sind durch die unterschiedlichen Schraffuren dargestellt. Jeder Wicklungsstrang U, V, W besteht aus zwei Doppel-Zahnspulen, von denen jeweils eine in der Unterschicht US und eine in der Oberschicht OS liegt. Die zwei Doppel-Zahnspulen eines jeden Wicklungsstranges U, V, W werden gemäß diesem Ausführungsbeispiel genau um je eine Polteilung gegeneinander verschoben und diese werden jeweils genau umgekehrt bestromt.

Anders ausgedrückt bedeutet dies, dass die Stromrichtung der beiden Spulen der ersten Doppel-Zahnspule im Bereich der 1. und 2. Nut des Wicklungsstrangs US mit der Stromrichtung der beiden Spulen der zweiten Doppel-Zahnspule im Bereich der 9. und 10. Nut identisch ist, während die Stromrichtung in den anderen Wicklungsabschnitten, somit im Bereich der 3. und 4. Nut der ersten Doppel-Zahnspule und im Bereich der 7. und 8. Nut der zweiten Doppel-Zahnspule genau umgekehrt ist.

Die Fig. 5 zeigt einen Zonenplan eines Ausführungsbeispiels einer 4-poligen Doppel-Zahnspulenwicklung mit der Strangzahl m = 3 mit 24 Nuten. Die prinzipielle Anordnung und Abfolge der Spulenpaare der Doppelzahnspulen 20, 30 erfolgt wie zuvor beschrieben.

Die Reihenfolge der Wicklungsstränge U, V, W in Umlaufrichtung des Ständers 10 in der Unterschicht US und der Oberschicht OS ist gleich, während jedoch die Stromrichtung in den entsprechenden Spulen Si, Sa gegenläufig ist.

In der Fig. 6 ist ein Ausführungsbeispiel mit einer Nutbelegung einer Doppel-Zahnspule 20 mit innerer und äußerer Spule Si, Sa mit jeweils unterschiedlichen Windungszahlen gezeigt, wobei die äußere Spule Sa der Doppel-Zahnspule 20 eine höhere Windungszahl aufweist gegenüber der inneren Spule Si.

Die 3-strängige Doppel-Zahnwicklung der Polzahl p erregt ein Luftspaltfeldspektrum mit den Ordnungszahlen v/p = 1 + 6 × g mit g = 0, ±1, ±2, ±3, ±4, ... und besitzt, wenn der Nutschlitz vernachlässigt wird, betragsmäßig genau 2 unterschiedliche Wicklungsfaktoren |ξᵥ|, die sich, wie in nachfolgender Tabelle 1 dargestellt, zyklisch wiederholen.

**Tabelle 1**

| v/p | \|ξᵥ\| |
|---|---|
| ... | ... |
| 13 | 0,483 |
| 7 | 0,129 |
| 1 | 0,483 |
| -5 | 0,129 |
| -11 | 0,483 |
| ... | ... |

Damit besitzt die Doppel-Zahnspulenwicklung etwa die Grundfeldausnutzung der Zahnspulenwicklung mit der Lochzahl q = 1, jedoch eine deutlich bessere Selektivität.

Durch unterschiedliche Windungszahlen der inneren und äußeren Spule eines Spulenpaars eines Wicklungsstrangs ist es möglich die Amplitude des Grundfeldes der Polpaarzahl p zu steigern und die Amplituden der Oberfelder zu reduzieren. Wird beispielsweise ein Verhältnis der Windungen von innerer Spule zu äußerer Spule von 0,733 gewählt, können die Wicklungsfaktoren der 5. und 7. Ordnung zu Null gebracht werden, der Grundfeldwicklungsfaktor steigt gleichzeitig von 0,483 auf 0,517 an. Durch eine weitere Reduzierung des Verhältnisses der Anzahl der Windungen der inneren Spule Si zur äußeren Spule Sa lässt sich der Grundfeldwicklungsfaktor weiter steigern. Für ein Verhältnis der Windungszahlen von 0,527 erhält man beispielsweise Wicklungsfaktoren für die Oberfelder der 5. und 7. Ordnung entsprechend dem Windungsverhältnis von 1 (siehe Tabelle 1), der Grundfeldwicklungsfaktor kann hingegen auf den Wert von 0,552 gesteigert werden. Das entspricht einer Steigerung um rund 15 % gegenüber einer Ausführung mit identischen Windungszahlen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht, so dass z. B. die Anzahl der Nuten, die Anzahl der Wicklungsstränge m und die Anzahl der Wicklungen auf den Anwendungsfall entsprechend angepasst sein kann.

## Patentansprüche

1. Drehfeldmaschine mit einem 2p-poligen Ständer (10) mit der Anzahl n an Zähnen (Z) mit n dazwischen liegenden Nuten (N) ausgebildet mit einer Wicklungsanordnung in Zahnspulentechnik, wobei p die Polpaarzahl der Drehfeldmaschine ist, umfassend m Wicklungsstränge (U, V, W), wobei m die Anzahl der Wicklungsstränge (U, V, W) der Drehfeldmaschine definiert, **dadurch gekennzeichnet, dass** die Wicklungsanordnung aus wenigstens einer ersten Doppel-Zahnspule (20) und einer zweiten Doppel-Zahnspule (30) besteht und die jeweils vier benachbarten Nuten (N) des Ständers (10) zur Hälfte mit einem Wicklungsstrang (U, V, W) belegen, derart, dass diese Anzahl benachbarter Nuten (N) entweder in einer Oberschicht (OS) oder in einer Unterschicht (US) durch einen Wicklungsstrang (U, V, W) belegt sind und dass die erste Doppelzahnspule (20) in der Unterschicht (US) mit einem ersten Wicklungsstrang (U, V, W) und die zweite Doppel-Zahnspule (30) in der Oberschicht (OS) mit einem vom ersten Wicklungsstrang (U, V, W) abweichendem zweiten Wicklungsstrang (U, V, W) bewickelt sind, wobei jede der beiden Doppel-Zahnspulen (20, 30) ein Spulenpaar aus zwei konzentrisch angeordneten Spulen (Sa, Si) ausbildet, und zwar einer inneren Spule (Si) sowie einer äußeren Spule (Sa), die um die Zähne (Z), die für die innere Spule (Si) verwendet wurden, herum gewickelt ist, und die zweite Doppel-Zahnspule (30) um eine Polteilung gegenüber der ersten Doppel-Zahnspule (20) in Umlaufrichtung versetzt am Ständer (10) angeordnet ist.

2. Drehfeldmaschine gemäß Anspruch 1, **dadurch gekennzeichnet, dass** die Stromrichtung im Wicklungsstrang (U, V, W) der zwei Spulen (Sa, Si) der ersten Doppel-Zahnspule (20) umgekehrt ist zur Stromrichtung in diesem Wicklungsstrang (U, V, W) der zwei Spulen (Sa, Si) der zweiten Doppel-Zahnspule (30).

3. Drehfeldmaschine gemäß einem der vorhergehenden Ansprüche 1 oder 2, **dadurch gekennzeichnet, dass** die Spulen (Si, Sa) der m Wicklungsstränge (U, V, W) in der Oberschicht (OS) und der Unterschicht (US) gegeneinander jeweils um den Winkel
| | |
|---|---|
| 2π/m p | für m ungerade und |
| π/m p | für m gerade |
versetzt sind.

4. Drehfeldmaschine gemäß einem der vorhergehenden Ansprüche, **dadurch gekennzeichnet, dass** zwischen der ersten Doppel-Zahnspule (20) und der zweiten Doppel-Zahnspule (30) jeweils eine dritte bzw. vierte Doppel-Zahnspule angeordnet ist, die jeweils zwei Nuten (N) belegen.

5. Drehfeldmaschine gemäß einem dem vorhergehenden Anspruch 4, **dadurch gekennzeichnet, dass** die Reihenfolge der Wicklungsstränge (U, V, W) in Umlaufrichtung des Ständers (10) in der Unterschicht (US) und der Oberschicht (OS) gleich ist, während die Stromrichtung in den entsprechenden Spulen (Si, Sa) gegenläufig ist.

6. Drehfeldmaschine gemäß einem der vorhergehenden Ansprüche, **dadurch gekennzeichnet, dass** die Anzahl der Windungen in einem Wicklungsstrang (U, V, W) der inneren Spule (Si) eines Spulenpaars einer Doppel-Zahnspule (20, 30) geringer ist als die Anzahl der Windungen dieses Wicklungsstrangs (U, V, W) in der äußeren Spule (Sa) des Spulenpaars im Bereich dieser Doppel-Zahnspule (10, 20).

7. Drehfeldmaschine gemäß Anspruch 6, **dadurch gekennzeichnet, dass** das Verhältnis der Anzahl der Windungen der inneren Spule (Si) zur äußeren Spule (Sa) eines Spulenpaars einer Doppel-Zahnspule (20, 30) vorzugsweise kleiner 0,8 ist, weiter vorzugsweise in einem Bereich zwischen 0,4 und 0,6 liegt.

8. Drehfeldmaschine gemäß einem der vorhergehenden Ansprüche, **dadurch gekennzeichnet, dass** der Ständer ein 2-oder 4-poliger Ständer (10) ist und somit p = 1 oder 2 ist.

## Claims

1. A three-phase machine having a 2-pole stator (10) having a number n of teeth (Z) with n grooves (N) in between, formed with a winding arrangement in a tooth-wound coil design, wherein p is the number of pole pairs of the three-phase machine, comprising m winding phases (U, V, W), wherein m defines the number of winding phases (U, V, W) of the three-phase machine, **characterized in that** the winding arrangement consists of at least one first double-layer tooth-wound coil (20) and one second double-layer tooth-wound coil (30), each of which tooth-wound coils occupies half of four respective adjacent slots (N) of the stator (10) with a winding phase (W), such that the number of adjacent slots (N) are occupied either in an upper layer (OS) or a lower layer (US) and that the first double-layer tooth-wound coil (20) is wound with a first winding phase (U, V, W) in the lower layer (US) and the second double-layer tooth-wound coil (30) is wound with a second winding phase (U, V, W) differing from the first winding phase (U, V, W) in the upper layer (OS) with the winding phase (U, V, W), wherein each of both double-layer tooth-wound coils (20, 30) forms a pair of two concentrically arranged coils (Sa, Si) a coil, namely an inner coil (Si) and an outer coil (Sa), which is wound around the teeth (Z) used for the inner coil (Si), and the second double-layer tooth-wound coil (30) is arranged such that it is shifted at the coil (10) by a pole pitch with respect to the first double-layer tooth-wound coil (20) in circulating direction.

2. The three-phase machine according to Claim 1, **characterized in that** the direction of the current in the winding phase (U, V, W) of the two coils (Sa, Si) of the first double-layer tooth-wound coil (20) is opposite to the direction of the current in said winding phase (U, V, W) of the two coils (Sa, Si) in the second double-layer tooth-wound coil (30).

3. The three-phase machine according to any one of the preceding Claims 1 or 2, **characterized in that** the coils (Si, Sa) of the m winding phases (U, V, W) in the upper layer (OS) and the lower layer (US) are shifted against each other respectively by an angle of
| | |
|---|---|
| 2π/m p | if m is an odd number and |
| π/m p | if m is an even number. |

4. The three-phase machine according to any one of the preceding claims, **characterized in that** third and fourth double-layer tooth-wound coils, respectively, are arranged between the first double-layer tooth-wound coil (20) and the second double-layer tooth-wound coil (30), wherein the third and fourth coils respectively occupy two slots (N).

5. The three-phase machine according to the preceding Claim 4, **characterized in that** the sequence of the winding phases (U, V, W) is the same in the direction of rotation of the stator (10) in the lower layer (US) and the upper layer (OS), whereas the direction of the current is reversed in the respective coils (Si, Sa).

6. The three-phase machine according to any one of the preceding claims, **characterized in that** the number of windings in a winding phase (U, V, W) of the inner coil (Si) of a pair of coils of a double-layer tooth-wound coil (20, 30) is lower than the number of windings of said winding phase (U, V, W) in the outer coil (Sa) of the pair of coils in the area of said double-layer tooth-wound coil (10, 20).

7. The three-phase machine according to Claim 6, **characterized in that** the ratio of the number of windings of the inner coil (Si) to those of the outer coil (Sa) of a pair of coils of a double-layer tooth-wound coil (20, 30) preferably is smaller than 0.8, and further preferably lies in a range between 0.4 and 0.6.

8. The three-phase machine according to any one of the preceding claims, **characterized in that** the stator is a 2-pole or 4-pole stator and thus is p = 1 or 2.

## Revendications

1. Machine à champ tournant comportant un stator à 2p pôles (10) comportant le nombre n de dents (Z) avec n rainures (N) situées entre elles, conçue avec un enroulement utilisant la technologie des bobines dentées,
dans laquelle p est le nombre de paires de pôles de la machine à champ tournant, comprenant m enroulements de phase (U, V, W), dans laquelle m définit le nombre d'enroulements de phase (U, V, W) de la machine à champ tournant, **caractérisée en ce que** l'enroulement est constitué d'au moins une première bobine dentée double (20) et d'une deuxième bobine dentée double (30) et qui occupent respectivement quatre rainures adjacentes (N) du stator (10) à moitié avec un enroulement de phase (U, V, W), de sorte que ce nombre de rainures adjacentes (N) sont occupées soit dans une couche supérieure (OS) soit dans une couche inférieure (US) par un enroulement de phase (U, V, W) et que la première bobine dentée double (20) est enroulée dans la couche inférieure (US) avec un premier enroulement de phase (U, V, W) et la deuxième bobine dentée double (30) est enroulée dans la couche supérieure (OS) avec un deuxième enroulement de phase (U, V, W) qui est différent du premier enroulement de phase (U, V, W), dans laquelle chacune des deux bobines dentées doubles (20, 30) forme une paire de deux bobines disposées concentriquement (Sa, Si), à savoir une bobine interne (Si) et une bobine externe (Sa) enroulées autour des dents (Z) utilisées pour la bobine interne (Si), et la deuxième bobine dentée double (30) est disposée sur le stator (10) de manière décalée dans la direction circonférentielle par rapport à la première bobine dentée double (20) autour d'un pas polaire.

2. Machine à champ tournant selon la revendication 1, **caractérisée en ce que** le sens du courant dans l'enroulement de phase (U, V, W) des deux bobines (Sa, Si) de la première bobine dentée double (20) est inversé par rapport au sens du courant dans cet enroulement de phase (U, V, W) des deux bobines (Sa, Si) de la deuxième bobine dentée double (30).

3. Machine à champ tournant selon l'une quelconque des revendications précédentes 1 ou 2, **caractérisée en ce que** les bobines (Si, Sa) des m enroulements de phase (U, V, W) dans la couche supérieure (OS) et la couche inférieure (US) sont décalées les unes par rapport aux autres de l'angle
| | |
|---|---|
| 2π/m p | si m est impair et |
| π /m p | si m est pair |
respectivement.

4. Machine à champ tournant selon l'une quelconque des revendications précédentes, **caractérisée en ce qu'**entre la première bobine dentée double (20) et la deuxième bobine dentée double (30) est disposée respectivement une troisième ou une quatrième bobine dentée double, occupant respectivement deux rainures (N).

5. Machine à champ tournant selon la revendication précédente 4, **caractérisée en ce que** l'ordre des enroulements de phase (U, V, W) dans la direction circonférentielle du stator (10) est identique dans la couche inférieure (US) et dans la couche supérieure (OS), tandis que le sens du courant dans les bobines correspondantes (Si, Sa) est opposé.

6. Machine à champ tournant selon l'une quelconque des revendications précédentes, **caractérisée en ce que** le nombre de tours dans un enroulement de phase (U, V, W) de la bobine interne (Si) d'une paire de bobines d'une bobine dentée double (20, 30) est inférieur au nombre de tours de cet enroulement de phase (U, V, W) dans la bobine externe (Sa) de la paire de bobines au niveau de cette bobine dentée double (10, 20).

7. Machine à champ tournant selon la revendication 6, **caractérisée en ce que** le rapport du nombre de tours de la bobine interne (Si) sur la bobine externe (Sa) d'une paire de bobines d'une bobine dentée double (20, 30) est de préférence inférieur à 0,8, de manière davantage préférée est situé dans une plage comprise entre 0,4 et 0,6.

8. Machine à champ tournant selon l'une quelconque des revendications précédentes, **caractérisée en ce que** le stator est un stator (10) à 2 ou 4 pôles et donc p = 1 ou 2.
